# DEMANDE DE BREVET EUROPEEN

(11) **EP 4 024 954 A1**
(43) Date de publication de la demande: **06.07.2022**
(21) Numéro de dépôt: 21218169.7
(22) Date de dépôt: 29.12.2021
(51) Int. Cl.: H04W 36/36, H04W 48/18, H04W 36/14, H04W 36/24

(54) **ITINÉRANCE D'UN TERMINAL MOBILE ENTRE UNE PLURALITÉ DE RÉSEAUX DE RADIOCOMMUNICATION**

(30) Priorité: 31.12.2020 FR 2014288
(71) Demandeur: THALES, 92400 Courbevoie (FR)
(72) Inventeur: DELEY, Marion, 92622 GENNEVILLIERS CEDEX (FR); BURBAN, Dominique, 92622 GENNEVILLIERS CEDEX (FR); BOUET, Mathieu, 92622 GENNEVILLIERS CEDEX (FR); SCHOLLER, Franck, 92622 GENNEVILLIERS CEDEX (FR)
(74) Mandataire: Lavoix

(57) **Abrégé**

Ce procédé d'itinérance d'un équipement mobile (10_1) entre une pluralité de réseaux de radiocommunication (20_1, ..., 20_N) offrant une couverture à l'intérieur d'une région géographique (1), comporte : une phase d'utilisation d'une carte (CT), la carte étant subdivisée en cases (C_{k,l}), chaque case correspondant à une zone de la région géographique et comportant une liste (L_{k,l}) donnant, pour chaque réseau de la pluralité de réseaux, une mesure agrégée d'une grandeur indicative d'une qualité de service de la couverture offerte par ledit réseau ; et une phase d'utilisation consistant, pour l'équipement mobile, à relever sa position géographique (P(t)), et à interroger, en indiquant la position relevée, un serveur (30) mémorisant la carte (CT), puis, pour le serveur, à extraire de la carte une case centrale correspondant à la zone à l'intérieur de laquelle se situe l'équipement mobile, ainsi qu'au moins une case voisine de la case centrale, et à transmettre les cases ainsi extraites à l'équipement mobile, et, pour l'équipement mobile, à mémoriser les cases reçues, à sélectionner un réseau parmi la pluralité de réseaux sur la base de la liste de la case centrale et/ou de la liste de la case voisine, et initier une itinérance vers le réseau sélectionné.

## Description

La présente invention a pour domaine celui de l'itinérance d'un terminal mobile entre plusieurs réseaux de radiocommunication.

Si le basculement, au sein d'un réseau de radiocommunication, entre une station de base et une autre station de base (« *handover* » en anglais) est rapide, il n'en va pas de même pour le basculement d'une station de base d'un premier réseau vers une station de base d'un second réseau (basculement alors dénommé itinérance), que ces premier et second réseaux diffèrent l'un de l'autre par les opérateurs qui les gèrent (itinérance alors dénommée « *roaming* ») ou par les technologies qu'ils mettent en oeuvre (itinérance alors dénommée « *steering* »). Dans le présent document, on ne fera pas de différence entre ces deux types d'itinérance, et l'itinérance sera alors parfois dénommée « roaming ».

En effet, selon l'état de la technique, l'itinérance nécessite d'abord de vérifier des règles indiquant les mobilités possibles et/ou autorisées entre opérateurs de réseaux différents ou entre technologies de réseaux différents.

Notamment, au moment où un équipement quitte un premier réseau pour se connecter à un second réseau, il est prévu d'interroger une base de données d'un serveur (par exemple le serveur HSS (« Home Subscriber Server ») en technologie 4G) qui définit les droits associés à un abonné et par conséquent les possibilités de l'équipement utilisateur de cet abonné à utiliser un autre réseau que celui de son opérateur principal.

L'itinérance entre deux réseaux est donc une opération complexe qui nécessite par conséquent plusieurs secondes (de l'ordre de 7 à 8 secondes). Une telle durée de basculement se traduit inévitablement par une interruption de la communication en cours, ce qui n'est pas acceptable pour un utilisateur, notamment un utilisateur critique.

L'invention a donc pour but de résoudre ce problème, en proposant un procédé dont la mise en oeuvre permet un basculement d'un réseau à l'autre compatible avec le maintien d'une communication en cours.

L'invention a donc pour but de résoudre ce problème, en proposant un procédé dont la mise en oeuvre permet un basculement d'un réseau à l'autre compatible avec le maintien d'une communication en cours.

Pour cela, l'invention a pour objet un procédé d'itinérance d'un équipement mobile entre une pluralité de réseaux de radiocommunication offrant une couverture à l'intérieur d'une région géographique, le procédé comportant une phase d'utilisation d'une carte, la carte étant subdivisée en cases, chaque case étant en correspondance avec une unique zone de la région géographique et chaque case comportant une liste donnant, pour chaque réseau de la pluralité de réseaux de radiocommunication, une mesure agrégée d'une grandeur caractéristique indicative d'une qualité de service de la couverture offerte par le réseau considéré, la phase d'utilisation consistant, pour l'équipement mobile, à relever sa position géographique instantanée, et à interroger, en indiquant la position géographique instantanée relevée, un serveur central mémorisant la carte, puis, pour le serveur, à extraire de la carte une case centrale correspondant à la zone à l'intérieur de laquelle se situe l'équipement mobile d'après la position géographique instantanée indiquée, ainsi qu'au moins une case voisine de la case centrale, et à transmettre les cases ainsi extraites à l'équipement mobile, et, pour l'équipement, à mémoriser les cases reçues, à sélectionner un réseau parmi la pluralité de réseaux de communication sur la base de la liste de la case centrale et/ou de la liste de la case voisine, et initier une itinérance vers le réseau sélectionné.

Suivant des modes particuliers de réalisation, le procédé comporte une ou plusieurs des caractéristiques suivantes, prises isolément ou suivant toutes les combinaisons techniquement possibles :
- l'équipement mobile mémorise une pluralité de profils d'abonnement, chaque profil d'abonnement étant associé à un réseau de la pluralité de réseaux de radiocommunication, le procédé comporte, en outre, une étape consistant à vérifier si le réseau sélectionné est associé à un profil d'abonnement mémorisé par l'équipement mobile, et, dans l'affirmative, une étape initiée par l'équipement mobile consistant à piloter des moyens d'émission-réception de l'équipement mobile pour établir une connexion au réseau sélectionné avec dudit profil associé ;
- une liste d'une case comporte, pour chacun des réseaux, une information sur la fréquence d'émission utilisée par des points d'accès dudit réseau dans la zone géographique correspondant à ladite case, l'étape consistant à piloter les moyens d'émission-réception de l'équipement mobile pour établir une connexion au réseau sélectionné consistant à scanner d'abord la fréquence d'émission associée au réseau sélectionné indiquée par ladite liste ;
- le terminal relève, en outre, sa vitesse instantanée, et interroge le serveur central en indiquant également la vitesse instantanée relevée, le serveur central extrayant de la carte ladite au moins une case voisine de la case centrale en tenant compte de la vitesse instantanée ;
- une phase d'élaboration de la carte, consistant à collecter, auprès de chaque terminal d'une pluralité de terminaux mobiles, des mesures élémentaires de la grandeur caractéristique d'une couverture de chaque réseau de la pluralité de réseaux de radiocommunication, chaque mesure élémentaire étant géolocalisée et, de préférence, datée lors de son acquisition, puis à agréger les mesures collectées de manière à construire une carte, de préférence caractérisée par une période temporelle, chaque case étant associée à une liste donnant, pour chaque réseau de la pluralité de réseaux de radiocommunication, la mesure agrégée de la grandeur caractéristique d'un réseau d'une liste d'une case étant calculée à partir des mesures élémentaires acquises à l'intérieur de la zone correspondant à ladite case et, de préférence, à une date correspondant à la période temporelle de ladite carte ;
- le serveur central stocke une pluralité de cartes, chaque carte étant caractérisée par une période temporelle, et, dans l'étape d'extraction, la carte utilisée est la carte dont la période temporelle correspond à l'instant d'interrogation du serveur central par l'équipement mobile ; et
- la grandeur caractéristique est choisie dans le groupe comportant : une puissance du signal, un débit montant, un débit descendant, un rapport signal sur bruit, un nombre d'erreur dans les paquets de données reçues.

L'invention a également pour objet un système comportant un équipement mobile, une pluralité de réseaux de radiocommunication et un serveur central, caractérisé en ce que l'équipement mobile et ledit serveur central sont convenablement programmés pour mettre en œuvre le procédé d'itinérance tel que défini plus haut.

De préférence, l'équipement mobile est du type propre à mémoriser une pluralité de profils d'abonnement.

L'invention a également pour objet un programme d'ordinateur lorsqu'il est exécuté sur un équipement mobile, permet à ce dernier de coopérer avec un serveur central de manière à mettre en œuvre le procédé d'itinérance tel que défini plus haut.

L'invention et ses avantages seront mieux compris à la lecture de la description détaillée qui va suivre, d'un mode de réalisation particulier, donné uniquement à titre d'exemple illustratif et non limitatif, cette description étant faite en se référant aux dessins annexés, sur lesquels :
- la figure 1 est une représentation schématique du système selon l'invention ; et,
- la figure 2 est une représentation schématique, sous forme de blocs, du procédé selon l'invention, qui est mis en œuvre dans le système de la figure 1.

### Mode de réalisation de base

### SYSTEME

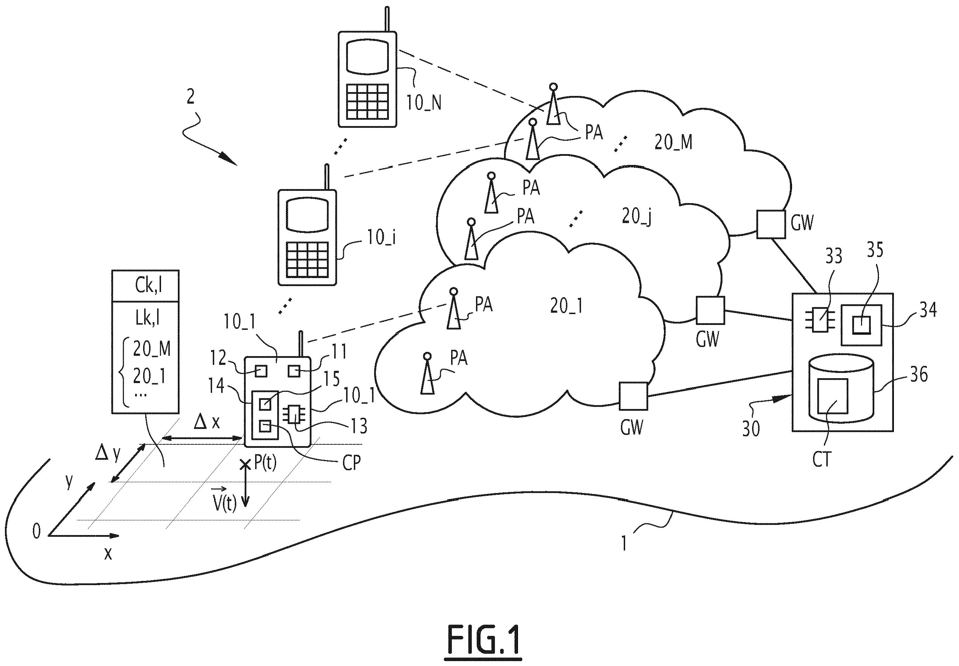

En se référant à la figure 1, un système 2 est associé à une zone géographique 1.

Le système 2 comporte une pluralité de terminaux mobiles 10_i, une pluralité de réseaux de radiocommunication 20_j et un serveur central 30.

La pluralité de réseaux comporte M réseaux. Sur la figure 1, ces différents réseaux sont indexés par l'entier j entre 1 et M. Sont ainsi représentés les réseaux 20_1, 20_j et 20_N. La pluralité de réseaux comporte des réseaux qui différent les uns des autres dans leurs technologies (2G, 3G, 4G, 5G ou autres selon les définitions de ces normes données par le 3GPP) et/ou dans les opérateurs qui les gèrent. Chacun de ces réseaux présente une couverture spécifique à l'intérieur de la zone géographique 1.

De manière connue, un réseau de radiocommunication, tel que le réseau 20_1, comporte une pluralité de points d'accès PA, chacun permettant à un terminal mobile d'établir une liaison avec ce réseau.

Comme schématisé sur la figure 1, un réseau de radiocommunication, tel que le réseau 20_1, comporte une passerelle GW, permettant au serveur central 30 d'être connecté, par exemple via une liaison IP (« Internet Protocol »), à chacun des réseaux 20_j.

La pluralité de terminaux mobiles comporte par exemple N terminaux. Sur la figure 1, les terminaux sont indexés par l'entier i entre 1 et N. Sont ainsi représentés les terminaux 10_1, 10_i et 10_N.

Un terminal, tel que le terminal 10_1, est un ordinateur comportant des moyens de calcul, tels qu'un processeur 13, et des moyens de mémorisation, tels qu'une mémoire 14. La mémoire comporte les instructions de programmes d'ordinateur qui, lorsqu'elles sont exécutées par les moyens de calcul permettent la mise en oeuvre de certaines fonctionnalités.

En particulier, la mémoire 14 d'un terminal comporte les instructions d'un programme 15 permettant la mise en oeuvre de certaines des étapes du procédé selon l'invention. La mémoire 14 comporte également une carte partielle CP.

Un terminal, tel que le terminal mobile 10_1, est de préférence un équipement utilisateur (« User equipement » - UE) respectant la norme LTE (« Long Term Evolution » telle que définie par 3GPP). Il s'agit par exemple un téléphone mobile, une tablette, ou encore un dispositif IoT (« Internet of Things » en anglais). Bien entendu, en variante, il s'agit d'un terminal respectant la norme 3G, la norme LTE, et/ou la norme 5G.

Plus généralement, il s'agit d'un terminal mobile capable de se connecter à plusieurs des réseaux 20_j. Pour ce faire, un terminal mobile, tel que le terminal 10_1, comporte des moyens d'émission-réception 11 permettant d'établir une liaison radio avec plusieurs des réseaux 20_j.

Chaque terminal mobile, tel que le terminal 10_1, comporte des moyens de géolocalisation 12 (par exemple du type par satellites comme le système « Global Positioning System » - GPS), qui permettent de déterminer la position géographique instantanée P(t) du terminal mobile. Dans un mode de réalisation simple où l'altitude n'est pas prise en compte, la position P(t) à l'instant t est donnée par deux coordonnées, x(t) et y(t).

De préférence, ces moyens 12 permettent également de déterminer le vecteur vitesse instantanée du terminal mobile, V(t). Par exemple la vitesse vectorielle est obtenue en comparant la position P(t) relevée à l'instant d'échantillonnage courant avec la position à l'instant d'échantillonnage précédent P(t-Δt) et en divisant par la période d'échantillonnage Δt des moyens de géolocalisation 12.

De manière connue, les moyens d'émission-réception 11 d'un terminal permettent également de mesurer une ou plusieurs grandeurs caractéristiques de la liaison établie (ou des tentatives pour établir une telle liaison) à un instant donné avec un point d'accès PA d'un réseau particulier 20_j.

La grandeur caractéristique est par exemple un débit montant, un débit descendant, un rapport signal sur bruit, un nombre d'erreurs dans les paquets de données reçues, etc., c'est-à-dire tout indicateur qui permet de quantifier la qualité de la liaison.

En variante, ils permettent également de mesurer une ou plusieurs grandeurs caractéristiques des autres réseaux offrant une couverture au point de localisation du terminal à un instant donné, sans qu'il y ait de liaison établie avec l'un ou l'autre de ces autres réseaux.

Ainsi, les terminaux permettent d'effectuer des mesures pour tous les émetteurs radios d'une zone, émetteurs 3GPP ou non-3GPP (tel que WiFi). En particulier, ils peuvent détecter la présence d'un nouveau émetteur radio, venant d'être mis en fonctionnement, et d'en informer le serveur pour mise à jour de la carte.

Eventuellement, un terminal peut trianguler la position d'un émetteur radio, à partir de plusieurs mesures, afin d'en repérer géographiquement la position et de transmettre cette information supplémentaire au serveur.

A l'instant t, un terminal remonte la qualité de service du réseau qui le sert, mais avantageusement aussi les niveaux de réception tels que le RSRP des réseaux voisins.

Les moyens d'émission-réception 11 permettent donc d'effectuer des mesures élémentaires d'une grandeur caractéristique de la couverture d'un ou plusieurs réseaux.

Toute mesure élémentaire est géolocalisée avec la position instantanée du terminal au moment de son acquisition, telle qu'indiquée par les moyens de géolocalisation 12. Avantageusement, une mesure élémentaire est également datée au moment de son acquisition.

Une mesure élémentaire m(j ; x, y ; t) est donc spécifiée par l'indice j du réseau auquel le terminal qui effectue la mesure est relié, la position x, y du terminal à l'instant de la mesure et, avantageusement, la date t de cette mesure.

Chaque terminal mobile est programmé pour transmettre périodiquement les mesures élémentaires qu'il a effectuées vers le serveur central 30.

Un terminal mobile, tel que le terminal 10_1, est propre à transmettre une requête d'itinérance vers le serveur central 30 comportant un attribut de position, comportant la position géographique instantanée P(t) du terminal mobile, et, avantageusement, un attribut de vitesse, comportant la vitesse instantanée V(t) du terminal mobile.

Le terminal mobile, tel que le terminal 10_1, est propre à mettre à jour une carte partielle CP, mémorisée dans la mémoire 14, avec les données qu'il reçoit du serveur central 30 en réponse à une requête d'itinérance. Par exemple, le terminal mobile reçoit une carte partielle CP à jour lors de sa première connexion à un réseau. Cette carte partielle CP est ensuite affinée, au cours de la mise en oeuvre du présent procédé, en fonction de la position et/ou du vecteur de déplacement du terminal mobile.

Pour effectuer un basculement d'un réseau à un autre, ou en prévision d'un basculement, le terminal mobile, tel que le terminal 10_1, est propre à sélectionner un réseau parmi une pluralité de réseaux indiquée par la carte partielle CP mémorisée.

Le serveur central 30 est un ordinateur comportant des moyens de calcul, tels qu'un processeur 33, et des moyens de mémorisation, tels qu'une mémoire 34 et une base de données 36.

La mémoire 34 comporte les instructions de programmes d'ordinateur qui, lorsqu'elles sont exécutées par les moyens de calcul permettent la mise en oeuvre de certaines fonctionnalités.

En particulier, la mémoire 34 du serveur 30 comporte les instructions d'un programme 35 permettant la mise en oeuvre de certaines des étapes du procédé selon l'invention.

La base de données 36 comporte au moins une carte CT. La carte CT est indicative de la couverture offerte par les différents réseaux 20_j sur la région 1.

La carte CT est une représentation de la région 1. La carte CT est subdivisée en une pluralité de cases, chaque case étant en correspondance avec une zone géographique de la région 1.

Une case est avantageusement identifiée par la position géographique d'un point de référence de la zone correspondante, par exemple la position géographique xc, yc du centre de cette zone.

Dans le cas d'une représentation matricielle, les cases étant identiques est rectangulaires, la zone correspondante s'étend sur un intervalle Δx selon la première coordonnée x et un intervalle Δy selon la seconde coordonnée y du système de coordonnées géographiques retenu.

On peut alors écrire : x_{c}=x₀+k.Δx et y_{c}=y₀+l.Δy, avec x₀ et y₀ le centre 0 d'une zone origine. Ainsi, une case est identifiée par les entiers k et l : C_{k,l}.

Chaque case C_{k,l} comporte une liste L_{k,l} indiquant les réseaux qui, parmi la pluralité de réseaux de radiocommunication 20_j, offrent une couverture à l'intérieur de la zone correspondant à la case C_{k,l} considérée.

A chacun des réseaux d'une liste est avantageusement associée une mesure globale d'une grandeur caractéristique de la couverture offerte par ce réseau à l'intérieur de la zone correspondant à la case C_{k,l} considérée. Cette grandeur caractéristique quantifie une qualité de service du réseau considéré à l'intérieur de la zone correspondant à la case C_{k,l} considérée.

De préférence, la mesure globale pour le réseau 20_j est déterminée à partir d'un grand nombre de mesures élémentaires m(j ; x, y ; t) de la grandeur caractéristique réalisées par les terminaux 10_i alors qu'ils se trouvaient à l'intérieur de la zone correspondant à la case C_{k,l} considérée. Par exemple, la valeur globale est déterminée par le serveur 30 en effectuant une moyenne des mesures élémentaires collectées. En variante, d'autres traitements peuvent être envisagés.

La liste d'une case est de préférence ordonnée selon la valeur de cette mesure globale. Est de préférence indiqué en premier le réseau pour lequel la valeur globale est la plus importante, puis le suivant, etc.

Lors de la réception d'une requête d'itinérance émise par un terminal mobile, le serveur 30 est propre à interroger la base de données 36 et à extraire de la carte CT les données de la case, dite centrale, associée à la zone à l'intérieur de laquelle se situe le terminal mobile (d'après la position instantanée P(t) indiquée dans la requête d'itinérance), ainsi que, de préférence, une ou plusieurs cases voisines à de la case centrale.

Les cases voisines comportent au moins une ou plusieurs cases adjacentes.

La zone géographique correspondant à une case adjacente d'une case centrale est en continuité géographique avec la zone géographique associée à cette case centrale.

Avantageusement, les cases voisines extraites sont sélectionnées en tenant compte de la vitesse instantanée V(t) indiquée dans la requête d'itinérance. Ainsi seront extraites uniquement les cases adjacentes de la case centrale vers lesquelles pointe la vitesse V(t), c'est-à-dire vers lesquelles se dirige le terminal mobile émetteur de la requête d'itinérance.

Le serveur central 30 est propre à transmettre une réponse d'itinérance au terminal requêter contenant comme attributs les cases extraites de la base de données et, pour chaque case, les listes des réseaux associées et, avantageusement, la mesure globale pour chacun de ces réseaux.

### PROCEDE

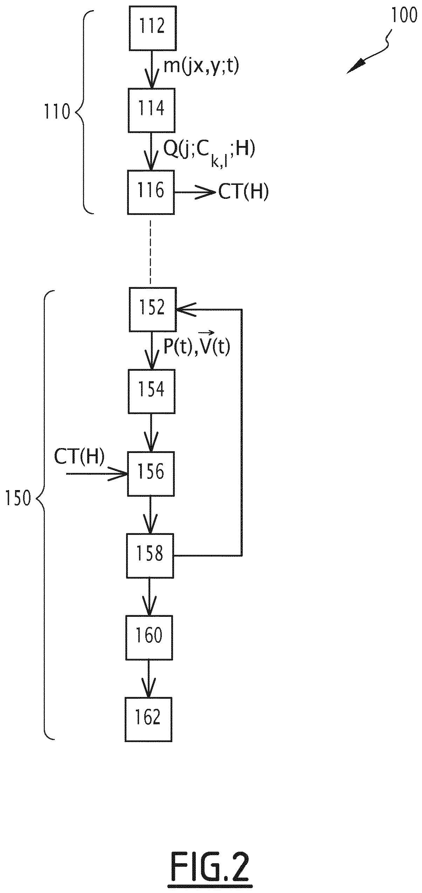

Va maintenant être décrit, en référence à la figure 2, un mode de réalisation préféré du procédé d'itinérance selon l'invention.

Le procédé d'itinérance 100 comporte une phase 110 de mise à jour d'une carte CT mémorisée sur le serveur central 30, et une phase 150 d'utilisation de cette carte CT afin de faciliter l'itinérance d'un équipement mobile. Dans la présente description, cet équipement est par exemple le terminal 10_1, qui appartient à la pluralité de terminaux mobiles avantageusement utilisée dans la phase 110. Mais, en variante, cela pourrait ne pas être le cas et l'équipement impliqué dans la mise en oeuvre de la phase 150 pourrait être différents des terminaux impliqués dans la mise en oeuvre de la phase 110.

La phase 110 a pour but de créer, de renseigner et de mettre à jour régulièrement une carte CT indicative de la couverture offerte par les différents réseaux 20_j dans la région 1.

La carte CT est de préférence obtenue en agrégeant des mesures élémentaires effectuées par chacun des terminaux 10_i de la pluralité de terminaux au cours de leur déplacement dans la région 1 et le leur itinérance d'un réseau à l'autre.

Cette collecte de données peut prendre du temps afin d'obtenir un nombre de mesures élémentaires suffisant pour la majorité des cases afin d'obtenir une carte CT significative. Il faut en effet collecter des mesures en nombre pour chaque case de la carte et, pour chaque case, pour chacun des réseaux considérés. Le nombre de mesures nécessaire peut dépendre de l'algorithme utilisé pour les agréger et calculer une mesure globale.

Ainsi, la phase 110 comporte une étape 112 de collecte de mesures élémentaires.

L'application cliente 15 est exécutée en tâche de fond sur chacun des terminaux 10_i. Elle permet d'acquérir périodiquement des mesures élémentaires réalisées par les moyens d'émission-réception 11.

Chaque mesure est étiquetée avec l'identifiant j du réseau 20_j étudié, la position P(t) du terminal au moment de l'acquisition de cette mesure. Avantageusement, l'étiquette comporte également la date au moment de l'acquisition de la mesure. Une mesure élémentaire est ainsi notée m(j ; x, y ; t).

Les mesures élémentaires réalisées sont placées dans un tampon de la mémoire 14 et transmises au serveur central 30, par exemple lorsque le terminal n'est pas utilisé mais est connecté à un réseau permettant l'acheminement des données vers le serveur 30.

En variante, si le terminal de mesure ne bouge pas, il effectue et remonte les informations vers le serveur avec une période « longue ». En revanche, s'il se déplace, il effectue et remonte les mesures avec une période « courte ». Ce mécanisme d'ajustement dynamique de la fréquence des mesures permet d'optimiser l'utilisation de la batterie des terminaux 10_i.

Lorsqu'elles sont reçues côté serveur, ces données externes sont stockées dans la base de données 36 en vue d'être traitées.

Dans une étape 114, le serveur 30 agrège les mesures élémentaires collectées. Par exemple et de manière particulièrement simple, pour une case C_{k,l} et un réseau particulier 20_j, le serveur 30 effectue une moyenne des mesures élémentaires m(j ; x, y ; t) acquises par les terminaux 10_i au moment où ils se situaient à l'intérieur de la zone correspondante, c'est-à-dire lorsque x et y se trouvent respectivement dans l'intervalle [x₀+k.Δx-Δx/2 ; x₀+k.Δx+Δx/2] et [y₀+l.Δy-Δx/2 ; y₀+l.Δy+Δx/2]. Une mesure globale est obtenue pour le réseau 20_j et la case C_{k,l}: QoS(j ; c_{k,l}). Cette grandeur globale caractérise le réseau 20_j sur la cellule C_{k,l}.

A l'étape 116, pour une case donnée C_{k,l}, les grandeurs globales des différents réseaux 20_j couvrant la zone associée à la case C_{k,l} permettent de classer les différents réseaux entre eux et de construire une liste ordonnée allant par exemple du réseau offrant la meilleure qualité de service (valeur de QoS la plus grande sur cette case) vers le réseau offrant la moins bonne qualité de service (valeur de QoS la plus faible).

Les réseaux pour lesquels la valeur globale est inférieure à un seuil prédéfini n'apparaissent avantageusement pas dans la liste. Ce filtrage permet de limiter la taille d'une liste et par conséquent le volume de données.

Dans un mode de réalisation, la liste est limitée à un unique élément, à savoir l'identifiant du réseau offrant la meilleure performance de service pour la case considérée.

Une carte CT est ainsi obtenue. Elle est avantageusement mise à jour périodiquement en tenant compte de nouvelles mesures élémentaires. Avantageusement, elle est mise à jour en temps réel en tenant compte des mesures élémentaires collectées à l'instant courant par l'ensemble des terminaux utilisateurs, c'. En particulier, la carte CT est mise à jour en temps réel pour la case occupée par le terminal utilisateur allant utiliser le service et les cases voisines, à partir des mesures collectées par l'ensemble des terminaux présents sur ces case, dont le terminal utilisateur allant utiliser le service.

La phase 150 d'utilisation d'une carte CT est indépendante de la phase 110.

Pour un terminal mobile particulier, tel que le terminal 10_1, la phase 150, débute par une étape 152 au cours de laquelle l'application cliente15 relève la position instantanée P(t) et, avantageusement, la vitesse instantanée V(t) du terminal 10_1, telles qu'indiquées par les moyens de géolocalisation 12.

A l'étape 154, l'application cliente 15 émet une requête d'itinérance vers le serveur central 30. La partie utile de cette requête comporte la position instantanée et la vitesse instantanée du terminal 10_1 telles que relevées à l'étape 152.

A l'étape 156, lors de la réception de cette requête d'itinérance, le serveur central 30 interroge la base de données 36 de manière à extraire de la carte CT uniquement les informations relatives à une case centrale associée à la zone géographique à l'intérieur de laquelle se situe le terminal raquetteur et à des cases voisines de cette case centrale.

Avantageusement, les cases voisines comportent, parmi les cases adjacentes situées autour de la case centrale, les cases associées aux zones géographiques vers lesquelles se dirige le terminal 10_1. Par exemple parmi les huit cases adjacentes à une case centrale, seules les trois cases adjacentes à l'ouest de la case centrale sont retenues lorsque le vecteur vitesse indique un déplacement vers l'ouest du terminal 10_1. On anticipe par conséquent la zone dans laquelle se situera le terminal dans un futur proche (par exemple 10 s).

Il s'agit donc des cases correspondant à des zones géographiques que le terminal risque d'atteindre lorsqu'il va quitter la zone correspondant à la case centrale.

A l'étape 158, le serveur central 30 émet une réponse d'itinérance vers le terminal 10_1. La partie utile de ce message comporte les informations extraites de la base, à savoir pour chaque case la liste des réseaux accessibles et, de préférence, pour chacun de ces réseaux, la qualité de service attendue.

On notera que le faible volume des données renvoyées au terminal permet d'optimiser l'usage de la bande passante descendante.

A l'étape 160, suite à la réception de la réponse d'itinérance, l'application cliente 15 met à jour la carte partielle CP présente dans la mémoire du terminal 10_1.

En répétant périodiquement les étapes 152 à 160, le terminal complète, au fur et à mesure de son déplacement, la carte partielle CP en recevant des informations sur la zone qu'il occupe et les zones voisines, avantageusement les zones vers lesquelles il se dirige. De préférence, les cases de la carte CP correspondant à des zones dont le terminal s'éloigne sont supprimées de la carte CP afin de lui conserver une taille réduite et sensiblement constante.

Puis, à l'étape 162, lorsque le terminal 10_1 souhaite ou doit sélectionner un réseau, il consulte la carte partielle CP présente dans sa mémoire 14.

Il est à noter qu'à cet instant le téléphone peut ne pas être en contact avec le serveur. Malgré cela, le terminal peut prendre une décision sur le meilleur réseau à sélectionner.

Par exemple, si pour la zone dans laquelle se situe le terminal, le réseau auquel le terminal est connecté n'est pas celui qui offre la meilleure qualité de service selon la carte partielle CP, il peut décider de basculer sur un autre réseau. Par exemple, les moyens d'émission-réception 11 du terminal mesurent, à l'instant courant, la qualité de service de la liaison établie. Le terminal compare ensuite la mesure venant d'être relevée avec la ou les mesures de qualité de service indiquées dans la carte partielle CP pour les différents réseaux listée. Si le valeur de la qualité de service d'au moins un des réseaux listés est supérieure à la mesure relevée, le terminal opte pour basculer vers ce réseau (s'il est différent du réseau courant auquel le téléphone mobile est actuellement connecté).

Par exemple encore, avant même de rentrer sur la zone voisine associée à une case adjacente, le terminal consulte les informations de la carte CP afin de sélectionner le meilleur réseau sur cette zone voisine et commence à négocier le basculement avec le réseau sélectionné (s'il est différent du réseau courant auquel le téléphone mobile est actuellement connecté).

Le terminal essaie d'établir une liaison avec le premier réseau indiqué dans la liste reçue. Si la qualité de la liaison ne correspond pas à la qualité attendue (i.e. la mesure globale caractérisant ce réseau), le terminal peut poursuivre la lecture de liste en sélectionnant le réseau suivant.

Si aucun des réseaux proposés dans la liste n'offre une qualité de service meilleure que le réseau actuellement utilisé, le terminal reste sur ce réseau.

Ainsi, dès que le téléphone mobile rentre effectivement sur cette zone voisine, la liaison avec le réseau sélectionné aura été préparée de sorte que la communication pourra être basculée du réseau courant vers le réseau sélectionné. Eventuellement les données de la communication pourront être stockées dans une mémoire tampon le temps de finaliser l'itinérance entre le réseau courant et le réseau sélectionné.

Ce mécanisme permet donc d'offrir à l'utilisateur une meilleure expérience.

### Exemple d'usage

Imaginons que l'utilisateur d'un téléphone se trouve dans un stade de football qui se remplit progressivement.

Le téléphone est initialement connecté à un premier réseau d'un premier opérateur. Il remonte des données de mesure de son point d'accès au premier réseau et scanne les réseaux voisins (présence d'un second réseau d'un second opérateur dans le stade).

La carte partielle que le téléphone stocke dans sa mémoire le situe dans une case où le meilleur réseau est le premier réseau.

Plus le stade se remplit et plus la qualité de service sur le premier réseau se dégrade.

Le téléphone remonte cette information (comme de nombreux autres smartphones de personnes présentes dans le stade) vers le serveur.

Le serveur met à jour la carte en considérant maintenant que le meilleur réseau est le second réseau. Il en informe le terminal.

Le terminal constatant qu'il capte moins bien sur le premier réseau, consulte la carte partielle mise jour, qui lui indique que le meilleure réseau est maintenant le second réseau.

Le terminal comparant la qualité courante sur le premier réseau et celle attendue sur le second réseau, décide de basculer automatiquement sur le second réseau.

Suite au basculement, deux cas sont envisageables :
- Si une mesure de la qualité de service indique que le second réseau est en fait moins bon que le premier réseau, le terminal rebascule sur le premier réseau. Avantageusement, il remonte au serveur une rétroaction (« feedback ») pour que le serveur apprenne. Par exemple, une note de confiance associée à la carte utilisée est diminuée ;
- Si la mesure de la qualité de service indique que le second réseau est effectivement le meilleur, le téléphone transmet une rétroaction positive au serveur pour qu'il augmente la note de confiance associée à la carte utilisée.

### Mode de réalisation avancé

De manière particulièrement avantageuse, le terminal 10_1 mis en oeuvre dans la phase d'utilisation comporte plusieurs profils d'abonnement, par exemple un premier profil d'abonnement associé à un premier réseau (20_1 par exemple) et un second profil d'abonnement associé à un second réseau (20_M par exemple).

Par exemple le terminal 10_1 peut comporter deux cartes SIM (« Subscriber Identity Module »), une première carte SIM pour stocker le premier profil d'abonnement, et une seconde carte SIM pour stocker le second profil d'abonnement.

Par exemple encore, le terminal 10_1 peut comporter une carte eUICC mémorisant, dans des containers différents, les premier et second profils. Une carte eUICC (« Embedded Universal Integrated Circuit Card ») est une évolution de la carte SIM, qui présente la capacité de pouvoir télécharger un profil en accédant, via l'interface radio (programmation « Over The Air » - OTA), à un système de gestion et de téléchargement de profil, comme un système SMDP (« Subscription Manager - Data Préparation ») du réseau.

Là où une carte SIM correspond à un unique profil d'abonnement (un abonnement délivré par un opérateur à un utilisateur), une carte eUICC mémorise plusieurs profils d'abonnement, c'est-à-dire autant d'abonnements de l'utilisateur à des opérateurs différents et/ou, pour un même opérateur, à des services différents.

Selon l'état de la technique, le basculement d'un tel terminal mobile depuis le premier réseau vers le second réseau s'effectue à travers un mécanisme de pilotage des cartes SIM (ou de la carte eUICC) depuis le réseau auquel le terminal est connecté (ici par exemple le premier réseau avec le premier profil). Pour cela, un système DM (« Device Management ») envoie, à travers l'interface air, une commande de basculement au terminal commandant une réinitialisation des moyens d'émission-réception 11 pour charger le profil de la seconde carte SIM (ou du second container de la carte eUICC). Le pilotage de cette mobilité OTA nécessite donc d'avoir une connectivité entre le premier réseau et le terminal mobile pour transmettre la commande. Mais surtout, il ne permet aucunement d'avoir une exécution instantanée du basculement du fait des traitements effectués côté réseau pour amener à l'émission d'une commande de basculement adaptée. Enfin, après le basculement, une phase de vérification du bon fonctionnement de l'opération est réalisée, qui rallonge davantage la durées du « roaming ».

La présente invention, lorsqu'elle est mise en oeuvre sur un terminal multi-profils (plusieurs carte SIM et/ou carte eUICC), permet de simplifier le basculement d'un réseau à l'autre. En effet, à l'étape 162, lorsque le terminal sélectionne un réseau particulier au moyen de la carte partielle CP, en anticipation par exemple son entrée sur une nouvelle zone géographique, il détermine si le réseau sélectionné correspond à l'un des profils enregistrés sur le terminal. Dans l'affirmative, le terminal initie alors lui-même le basculement vers le réseau sélectionné. Le terminal commande une réinitialisation des moyens d'émission-réception 11 avec les informations du profil du réseau sélectionné. Une fois réinitialisés les moyens d'émission-réception 11 cherchent à se connecter à un point d'accès du réseau sélectionné avec les informations du profil correspondant.

Avantageusement, la liste L_{k,l} d'une case C_{k,l} peut indiquer, pour chaque réseau, la fréquence effectivement utilisée par le point d'accès de ce réseau pour offrir une couverture sur la zone géographique correspondant à la case C_{k,l}.

Ainsi, le terminal peut passer cette information aux moyens d'émission-réception 11 au moment de leur réinitialisation, de manière à ce que ces derniers, au lieu de scanner l'ensemble de la bande de fréquence du réseau sélectionné, d'une extrémité à l'autre, à la recherche de la fréquence sur laquelle le point d'accès émet des balises, ils s'ajustent immédiatement sur la fréquence indiquée pour le réseau sélectionné. La détection des balises est donc accélérée.

Une fois que le terminal a accroché un point d'accès du réseau sélectionné, il ne reste plus que les étapes d'authentification à réaliser pour finaliser l'enrôlement du terminal auprès du réseau sélectionné.

Ainsi, dans ce mode de réalisation avancé, le « roaming », commandé par le terminal lui-même, s'effectue beaucoup plus rapidement que dans l'état de la technique. Une itinérance inférieure à la seconde est obtenue.

De nombreuses variantes sont envisageables par l'homme du métier.

En particulier, dans le mode de réalisation présenté ci-dessus, le terminal émet une requête vers le serveur pour recevoir des informations lui permettant de compléter sa carte partielle et c'est le serveur qui extrait les informations de la carte CT. En variante, le serveur transmet au terminal tout ou partie d'une carte CT soit régulièrement soit lors d'une évolution de la carte CT. C'est alors au terminal d'identifier les cases pertinentes de cette carte et de sélectionner un autre réseau si nécessaire.

Notamment, plusieurs cartes CT(H) peuvent être élaborées pour une même région 1 mais pour différentes périodes temporelles H. Une période peut par exemple correspondre à un créneau horaire journalier, ou à un mois de l'année. En effet, la couverture d'un réseau peut évoluer rapidement et de manière importante entre une heure creuse et une heure pleine. Il est donc souhaitable de pouvoir disposer de cartes reflétant cette variabilité temporelle. Pour construire une telle carte, il faut donc étiqueter chaque mesure élémentaire non seulement avec la position instantanée du terminal au moment de l'acquisition de cette mesure élémentaire, mais également avec la date ou l'instant t de cette acquisition.

Le serveur central 30 est programmé pour agréger les mesures élémentaires appartenant non seulement à un même intervalle de positions (c'est-à-dire une case) mais également à une même période temporelle H.

Lors de l'utilisation de ce service, c'est l'instant de réception de la requête d'itinérance qui indique au serveur 30 quelle carte CT(H) il doit interroger.

En variante, d'autres manières de renseigner la carte CT sont envisageable comme par exemple obtenir tout ou partie des données d'un organisme de contrôle, tel que l'Autorité de Régulation des Communications Electroniques, des Postes et de la distribution de la presse - ARCEP pour la France. Une telle source d'information est avantageusement utilisée pour créer initialement une carte CT, les mesures élémentaires des terminaux utilisateurs permettent ensuite de la mettre à jour.

Des algorithmes variés peuvent être exécutés au niveau du serveur central pour agréger les mesures élémentaires en une mesure globale. L'homme du métier connaît des algorithmes de traitement dit de « Big Data » permettant de construire une carte adaptée. Par exemple des algorithmes d'apprentissage supervisé peuvent être adaptés pour classer les différents réseaux entre eux sur une zone géographique.

Dans encore une autre variante, si les cases sont de petite taille et/ou si l'équipement a une vitesse instantanée d'amplitude élevée, les cases voisines de la case centrale extraites de la carte peuvent comprendre non seulement des cases adjacentes à la case centrale (cases voisines de rang 1), mais également des cases adjacentes à des cases adjacentes à la case centrale, c'est-à-dire des cases voisines de rang 2 par rapport à la case centrale. On peut bien sûr, étendre l'extraction à des cases voisines de rang r, r étant un nombre entier entre 1 et une valeur maximale R. R peut être fixe ou variable, par exemple dépendre de la vitesse instantanée de l'équipement.

En variante, les cases peuvent correspondre à des zones géographiques de tailles variables les unes des autres, la taille d'une zone étant par exemple inverse du nombre de mesures élémentaires collectées sur cette zone. Lorsque le nombre de mesures pour une case est suffisamment important, cette case peut être subdivisée en une pluralité de nouvelles cases. Dans encore une autre variante, la taille des cases dépend de la vitesse du terminal : le serveur ajuste la granularité de la carte en fonction de la vitesse du terminal.

Les cases peuvent également avoir d'autres formes que la forme rectangulaire du mode de réalisation préféré.

Une liste peut associer à un réseau plusieurs mesures globales d'autant de grandeurs caractéristiques. L'équipement peut alors choisir de privilégier une grandeur caractéristique en fonction par exemple de l'usage envisagé de la connexion (voie, vidéo, données sécurisées...) et de choisir un réseau sur la base de la mesure globale de cette grandeur caractéristique.

Dans encore une autre variante, le serveur central peut filtrer les listes extraites de la base de données en ne retenant que les réseaux pour lesquels le terminal requérant a le droit de se connecter. Pour cela, le serveur central possède une base de données associant à chaque terminal enregistré l'ensemble des réseaux auxquels il a un droit de connexion. Sur la base de l'identifiant du terminal présent dans la requête émise par ce dernier, le serveur centrale peut restreindre la liste des réseaux disponibles dans la zone géographique où se trouve le terminal et les zones voisines, aux seuls réseaux accessibles au terminal. Ainsi, la carte partielle CP côté terminal ne comporte que des informations utiles, à savoir des réseaux auxquels le terminal peut chercher à se connecter avec de réelles chances d'être enrôlé.

La solution présentée ci-dessus initie un basculement depuis le terminal et non pas depuis le réseau. Le terminal possède localement une information sur le ou les meilleur(s) réseau disponible là où il se trouve ou là où il va se trouver dans un futur proche, ce qui lui permet d'initier un basculement en fonction de sa position et/ou de sa vitesse.

Elle permet d'anticiper un basculement et, dans certains cas, de le rendre plus rapide (inférieur à la seconde).

Elle offre une approche dynamique (fondée sur l'apprentissage des couvertures réelles offertes par les différents réseaux) de manière à fournir une information robuste et éprouvée au terminal.

## Revendications

1. Procédé d'itinérance (100) d'un équipement mobile (10_1) entre une pluralité de réseaux de radiocommunication (20_1, ..., 20_N) offrant une couverture à l'intérieur d'une région géographique (1), le procédé comportant une phase d'utilisation (150) d'une carte (CT), la carte étant subdivisée en cases (C_{k,l}), chaque case étant en correspondance avec une unique zone de la région géographique et chaque case comportant une liste (L_{k,l}) donnant, pour chaque réseau de la pluralité de réseaux de radiocommunication, une mesure agrégée d'une grandeur caractéristique indicative d'une qualité de service de la couverture offerte par le réseau considéré, la phase d'utilisation consistant, à relever (152) une position géographique instantanée (P(t)) et une vitesse instantanée (V(t)) de l'équipement mobile (10_1), à extraire (156) de la carte (CT) une case centrale correspondant à la zone à l'intérieur de laquelle se situe l'équipement mobile d'après sa position géographique instantanée, ainsi qu'au moins une case voisine de la case centrale en tenant compte de sa vitesse instantanée (V(t)), et à sélectionner (160) un réseau parmi la pluralité de réseaux de radiocommunication sur la base de la liste de la case centrale et de la liste de la case voisine, et initier une itinérance vers le réseau sélectionné (200).

2. Procédé selon la revendication 1, dans lequel l'équipement mobile (10_1) mémorise une pluralité de profils d'abonnement, chaque profil d'abonnement étant associé à un réseau de la pluralité de réseaux de radiocommunication, le procédé comportant, en outre, une étape consistant à vérifier si le réseau sélectionné est associé à un profil d'abonnement mémorisé par l'équipement mobile, et, dans l'affirmative, une étape initiée par l'équipement mobile consistant à piloter des moyens d'émission-réception (11) de l'équipement mobile pour établir une connexion au réseau sélectionné avec ledit profil associé.

3. Procédé selon la revendication 2, dans lequel une liste d'une case comporte, pour chacun des réseaux, une information sur la fréquence d'émission utilisée par des points d'accès dudit réseau dans la zone géographique correspondant à ladite case, l'étape consistant à piloter les moyens d'émission-réception (11) de l'équipement mobile pour établir une connexion au réseau sélectionné consistant à scanner d'abord la fréquence d'émission associée au réseau sélectionné indiquée par ladite liste.

4. Procédé selon l'une quelconque des revendications précédentes, comportant, en outre, une phase d'élaboration (110) de la carte (CT), consistant à collecter (112), auprès de chaque terminal d'une pluralité de terminaux mobiles, des mesures élémentaires de la grandeur caractéristique d'une couverture de chaque réseau de la pluralité de réseaux de radiocommunication, chaque mesure élémentaire étant géolocalisée et, de préférence, datée lors de son acquisition, puis à agréger (114) les mesures collectées de manière à construire une carte (CT), de préférence **caractérisée par** une période temporelle (H), chaque case étant associée à une liste (L_{k,l}) donnant, pour chaque réseau de la pluralité de réseaux de radiocommunication, la mesure agrégée de la grandeur caractéristique d'un réseau d'une liste d'une case étant calculée à partir des mesures élémentaires acquises à l'intérieur de la zone correspondant à ladite case et, de préférence, à une date correspondant à la période temporelle (H) de ladite carte.

5. Procédé selon l'une quelconque des revendications précédentes, dans lequel le serveur central stocke une pluralité de cartes, chaque carte étant **caractérisée par** une période temporelle (H), et en ce que dans l'étape d'extraction (156) la carte utilisée est la carte dont la période temporelle correspond à l'instant d'interrogation du serveur central (30) par l'équipement mobile.

6. Procédé selon l'une quelconque des revendications précédentes, dans lequel la grandeur caractéristique est choisie dans le groupe comportant : une puissance du signal, un débit montant, un débit descendant, un rapport signal sur bruit, un nombre d'erreur dans les paquets de données reçues.

7. Procédé selon l'une quelconque des revendications précédentes, dans lequel :
- soit la carte (CT) est mémorisée sur le serveur (30) et alors le terminal interroge (154) le serveur, en indiquant sa position géographique instantanée et sa vitesse instantanée, puis le serveur extrait (156) de la carte (CT) une case centrale correspondant à la zone à l'intérieur de laquelle se situe l'équipement mobile d'après sa position géographique instantanée, ainsi qu'au moins une case voisine de la case centrale en tenant compte de sa vitesse instantanée (V(t)), et transmet (158) les cases ainsi extraites à l'équipement mobile, et l'équipement mobile mémorise les cases reçues dans une carte partielle (CP) et sélectionne un réseau sur la base de ladite carte partielle ;
- soit la carte (CT) est mémorisée sur l'équipement mobile, le serveur préparant la carte et transmettant tout ou partie de ladite carte vers l'équipement mobile pour que ce dernier mette en oeuvre les étapes conduisant à la sélection d'un réseau à partir de la carte.

8. Système comportant un équipement mobile, une pluralité de réseaux de radiocommunication et un serveur central, **caractérisé en ce que** l'équipement mobile (10_1) et ledit serveur central (30) sont convenablement programmés pour mettre en oeuvre le procédé d'itinérance selon l'une quelconque des revendications 1 à 7.

9. Système selon la revendication 8, dans lequel l'équipement mobile est du type propre à mémorise une pluralité de profils d'abonnement.

10. Produit programme d'ordinateur (15), **caractérisé en ce que**, lorsqu'il est exécuté sur un équipement mobile (10_1), permet à ce dernier de coopérer avec un serveur central (30) de manière à mettre en oeuvre le procédé d'itinérance (100) selon l'une quelconque des revendications 1 à 7.
